**Europäisches Patentamt**

**European Patent Office**

**Office européen des brevets**

(19)

(11) Veröffentlichungsnummer : **0 541 856 B1**

## (12) EUROPÄISCHE PATENTSCHRIFT

(45) Veröffentlichungstag der Patentschrift :
**24.05.95 Patentblatt 95/21**

(51) Int. Cl.$^6$ : **G01S 7/52**

(21) Anmeldenummer : **91119565.9**

(22) Anmeldetag : **15.11.91**

(54) **Vorrichtung und Verfahren zur Unterdrückung von Reflexionen an einem Ultraschallwandler.**

(43) Veröffentlichungstag der Anmeldung :
**19.05.93 Patentblatt 93/20**

(45) Bekanntmachung des Hinweises auf die
Patenterteilung :
**24.05.95 Patentblatt 95/21**

(84) Benannte Vertragsstaaten :
**AT CH DE FR GB LI NL**

(56) Entgegenhaltungen :
**US-A- 4 796 237**
**PATENT ABSTRACTS OF JAPAN vol. 10, no.**
**57 (P-434)(2114) 7. März 1986 & JP-60 200 183**
**(NIHON MUSEN K.K.) 9. Oktober 1985**

(73) Patentinhaber : **SIEMENS**
**AKTIENGESELLSCHAFT**
**Wittelsbacherplatz 2**
**D-80333 München (DE)**

(72) Erfinder : **Hassler, Dietrich, Dipl.-Ing.**
**Flurweg 3**
**W-8525 Uttenreuth (DE)**

## Beschreibung

Die Erfindung betrifft eine Vorrichtung und ein Verfahren zur Unterdrückung von Reflexionen eines akustischen Empfangssignals an einem Ultraschallwandler.

Untersuchungen zur Qualität von Ultraschallbildern zeigen, daß der Kontrast zwischen echoarmen und echoreichen Gebieten u.a. deshalb verringert ist, weil sich ein Spiegel- oder Geisterbild des Primärbilds dem Ultraschallbild überlagert. Das Spiegelbild entsteht durch mehrfache Reflexionen oder Mehrfachstreuung zwischen dem Wandler und einer akustischen Grenzschicht in einem Untersuchungsgebiet, wie z.B. zu untersuchendes Gewebe, weil die akustischen Wellenwiderstände von Wandler und z.B. Gewebe unterschiedlich sind. Die nach einem Sendepuls einlaufenden Echosignale werden vom Ultraschallwandler zum Teil reflektiert und gehen wie ungewollte neue Sendeimpulse in das Untersuchungsgebiet, um ihrerseits Echosignale auszulösen, die vom System ins Bild gesetzt werden. Ein idealer Wandler reflektiert die Echosignale nicht, sondern absorbiert die gesamte angebotene akustische Empfangsenergie. Dann tritt dieser Effekt nicht auf. Es verbleiben lediglich Bildstörungen durch Mehrfachstreuung innerhalb des Gewebes und durch inhomogene Schallgeschwindigkeitsverteilung.

Durch eine oder mehrere Anpaßschichten an der Wandleroberfläche können Reflexionen herabgesetzt werden. Dabei werden Materialien mit einem akustischen Wellenwiderstand verwendet, der zwischen dem von Gewebe und Wandlerkeramik liegt. Die Anpaßschichten haben meist eine Dicke von 1/4 der akustischen Wellenlänge.

Dies bringt eine Verbesserung gegenüber dem Fall ohne Anpassung, der obengenannte Effekt wird damit jedoch nicht ausreichend vermieden.

Eine weitere Möglichkeit besteht darin, eine dämpfende Schicht zwischen dem Wandler und dem Untersuchungsgebiet anzuordnen. Die Reflexionen und die dadurch ausgelösten Echosignale müssen diese Schicht zweimal häufiger durchlaufen als das Primärecho. Die Mehrfachreflexionen werden daher relativ zum Primärecho stärker gedämpft und je nach Dämpfungswert der Schicht mehr oder weniger unterdrückt. Nachteilig ist allerdings, daß auch dem Primärecho Energie entzogen wird. Zum Ausgleich dieser Dämpfung kann die Sendeleistung bis zu einer durch die zulässige Gewebebelastung vorgegebene Grenze angehoben werden. Die maximale Eindringtiefe oder Tiefe des Untersuchunsgebietes ist jedoch gegenüber einem ungedämpften System verringert, weil die Dämpfung im Empfangsfall damit nicht aufgehoben ist.

Eine Möglichkeit, die bis jetzt jedoch noch keine praktische Bedeutung erlangt hat, liegt in der Verwendung von Piezomaterialien, deren akustischer Wellenwiderstand näher bei dem von Gewebe liegt als bei den gängigen Keramiken. Beispielsweise liegt das Verhältnis der Wellenwiderstände von üblicher Keramik zu Gewebe in der Gegend von 20, das von Kompositmaterialien in der Gegend von 10 und das von PVDF bei 2,4. Die Verkleinerung von Reflexionen an der Wandleroberfläche ist jedoch gering. Nachteilig bei der Verwendung von PVDF ist, daß ca. die 8fache Sendespannung im Vergleich zu einem Keramikwandler erforderlich ist.

Eine weitere theoretische Möglichkeit ist eine lange, kontinuierliche, d.h. ungestufte Anpaßschicht, für die es bisher aber keine technologischen Lösungen gibt. Außerdem ist z.B. die Kombination von PVDF- oder Kompositwandler mit ungestufter Anpaßschicht denkbar.

Eine weitere Möglichkeit ist aus dem Dokument Patent Abstracts of Japan, vol. 10, no. 57 (P - 434) [2114], 07/03/86; & JP - A - 60 200 183 bekannt, bei der unmittelbar nach einem ersten Sendeimpuls im zeitlichen Abstand von einer halben Wellenlänge ein zweiter Sendeimpuls mit abgeschwächter Amplitude ausgesendet wird zur Vermeidung von Mehrfachreflexionen des Sendeimpulses an der Grenzschicht.

Aufgabe der vorliegenden Erfindung ist es nun, eine Vorrichtung und ein Verfahren für ein Ultraschall-Sende-Empfangssystem anzugeben, bei dem an einen Ultraschallwandler während des Empfangs Reflexionen, die durch unterschiedliche Impedanzen des Ultraschallwandlers und eines sich daran anschließenden akustischen Ausbreitungsmediums oder Untersuchungsgebiets verursacht werden, weitgehend vermieden werden.

Die erstgenannte Aufgabe wird bei einer Vorrichtung dadurch gelöst, daß der Ultraschallwandler mit einer Kompensationsschaltung verbunden ist, die dem Ultraschallwandler während des Empfangs ein Kompensations-Sendesignal zuführt, das dem akustischen Empfangssignal ähnlich ist und eine zum Empfangssignal umgekehrte Polarität aufweist, so daß der reflektierte Anteil des akustischen Empfangssignals kompensiert ist, und daß in einem ebenfalls mit dem Ultraschallwandler verbundenen Empfangskanal ein Summierglied angeordnet ist, dessen erstem Eingang ein kompensiertes Empfangssignal, welches aus dem Kompensations-Sendesignal und einem dem akustischen Empfangssignal entsprechenden elektrischen Empfangssignal gebildet ist, zuführbar ist und dessen zweiter Eingang mit der Kompensationsschaltung verbunden ist, wobei dem zweiten Eingang ein Signal zuführbar ist, das den vom Kompensations-Sendesignal herrührenden Anteil aus dem kompensierten Empfangssignal entfernt, so daß der Ausgang des Summiergliedes ein vom Kompensations-Sendesignal bereinigtes Empfangssignal abgibt.

Die zweitgenannte Aufgabe wird bei einem Verfahren dadurch gelöst, daß dem Ultraschallwandler während des Empfangs ein Kompensations-Sendesignal zugeführt wird, das dem akustischen Empfangssignal ähnlich ist und eine zum akustischen Empfangssignal umgekehrte Polarität aufweist, so daß der reflektierte Anteil des akustischen Empfangssignals kompensiert ist, und daß der vom Kompensations-Sendesignal herrührende Anteil aus einem aus dem Kompensations-Sendesignal und einem dem akustischen Empfangssignal entspechenden elektrischen Empfangssignal gebildeten kompensierten Empfangssignal wieder entfernt wird.

Die Grundidee der Vorrichtung und des Verfahrens liegt darin, den wegen seines hohen Wellenwiderstandes akustisch harten Wandler durch aktive elektrische Anregung künstlich so weich wie Gewebe zu machen oder so erscheinen zu lassen. Die Wandleroberfläche macht wegen der Materialhärte die Elongationen bzw. Schnellen des Echosignals im Untersuchungsgebiet oder Gewebe nicht in gleicher Größe mit, sondern baut dafür höhere Drücke auf. Dies führt zur Reflexion eines Teil der Echoleistung. Wenn die Wandleroberfläche durch eine elektrische Anregung dazu gebracht wird, die Teilchenschwingung des Gewebes voll mitzumachen, werden Reflexionen vermieden. Dies bedeutet, daß z.B. die Dickenverringerung des Wandlers aufgrund einer Druckwelle des Echosignals elektrisch verstärkt wird. Man kann dies auch als Druckkompensation für den reflektierten Anteil des Echosignals in einem linearen System auffassen: Der Wandler sendet während der Empfangsphase ein Äquivalent oder einen Schätzwert des akustischen Empfangssingals so aus, daß der vom Wandler zurückgeworfene Anteil des aktuell empfangenen Echosignals vor dem Wandler zu Null ausgeglichen wird. Das Äquivalent ist dem akustischen Empfangssignal ähnlich, d.h. bis auf die Amplitude formgleich. Dann wird keine Reflexion abgestrahlt.

Eine vorteilhafte Ausgestaltung der Vorrichtung zeichnet sich dadurch aus, daß die Kompensationsschaltung zusätzlich hinter dem Ausgang des Summierers mit dem Empfangskanal verbunden ist und einen Speicher umfaßt, worin ein dem Empfangssignal entsprechendes Signal speicherbar ist, aus dem das Kompensations-Sendesignal erzeugbar ist.

Eine vorteilhafte Ausgestaltung des Verfahrens zeichnet sich dadurch aus, daß das Kompensations-Sendesignal aus dem Empfangssignal eines ersten Sende-Empfangs-Zyklus gewonnen wird und daß in einem wiederholten Sende-Empfangs-Zyklus während des Empfangs dem Wandler das aus dem ersten Sende-Empfangs-Zyklus gewonnene Kompensations-Sendesignal zugeführt wird.

Durch die Erzeugung des Kompensations-Sendesignals aus einem vorhergehenden Sende-Empfangs-Zyklus ist die Rückkopplung prinzipiell stabil. In einem einfachen Rückkopplungszweig kann unter bestimmten Bedingungen eine positive Rückkopplung der Dickenänderung zu Eigenschwingungen führen.

Die hier angegebene Kompensation von Reflexionen am Wandler läßt sich gut zusammen mit den aus dem Stand der Technik bekannten und vorstehend erläuterten Maßnahmen zur Reduzierung von Reflexionen einsetzen.

Weitere Vorteile ergeben sich aus der Beschreibung von zwei Ausführungsbeispielen. Es zeigen:

FIG 1     ein Blockschaltbild einer Vorrichtung zur Kompensation von Reflexionen an einem Ultraschallwandler mit einem digitalen Speicher und analoger Signalverarbeitung und

FIG 2     ein Blockschaltbild einer Vorrichtung zur Unterdrückung von Reflexionen entsprechend wie in FIG 1, jedoch mit einer digitalen Signalverarbeitung.

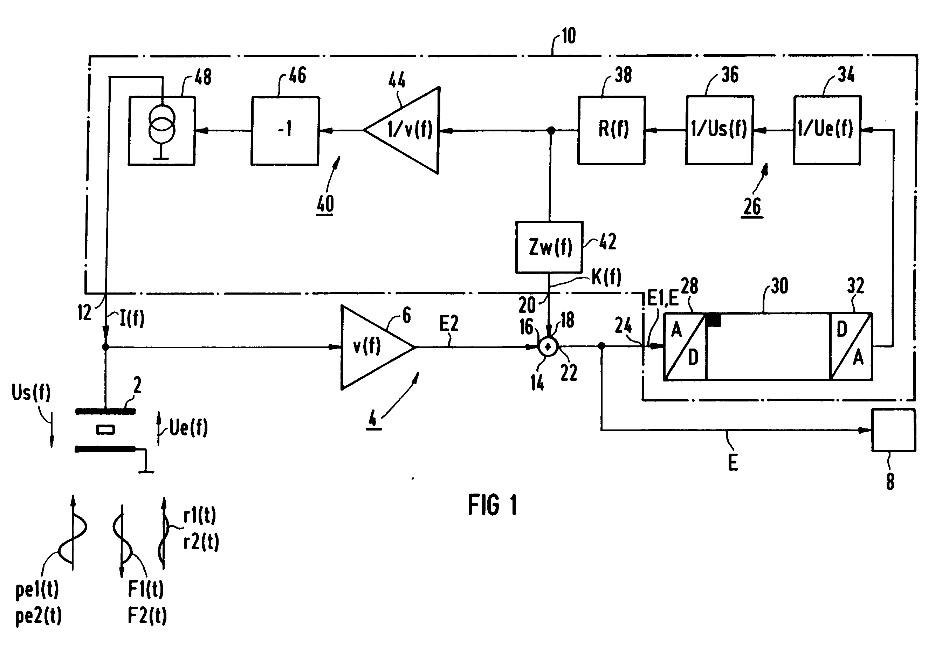

In FIG 1 ist ein Ultraschallwandler 2 mit einem Empfangskanal 4 verbunden, der einen zeitgesteuerten oder TGC Verstärker 6 zur Kompensation der Dämpfung der Ultraschallwelle in Gewebe umfaßt. Der Empfangskanal 4 gibt ein hochfrequentes Echosignal E an eine Elektronik 8 ab, die das Echosignal E mit anderen Echosignalen zu einem Ultraschallbild aufbereitet.

Eine Kompensationsschaltung 10 ist mit einem ersten Ausgang 12 mit dem Ultraschallwandler 2 verbunden. Die Kompensationsschaltung 10 führt dem Ultraschallwandler während des Empfangs ein Kompensations-Sendesignal I(f) zu, das nach Wandlung in ein akustisches Signal äquivalent oder ähnlich, d.h. bis auf Amplituden formgleich, zum reflektierten Anteil des Empfangssignals oder Nutzechos pe2(t) ist und eine zum Empfangssingal pe2(t) umgekehrte Polarität aufweist, so daß der reflektierte Anteil F2(t) einer einlaufenden Ultraschall-Druckwelle pe2(t) verschwindet.

Im Empfangskanal 4 ist hinter dem zeitgesteuerten Verstärker 6 ein Summierglied 14 angeordnet, dessen erster Eingang 16 mit dem Ausgang des zeitgesteuerten Verstärkers 6 verbunden ist. Ein zweiter Eingang 18 des Summierglieds 14 ist mit einem zweiten Ausgang 20 der Kompensationsschaltung 10 verbunden. Der Ausgang 22 des Summierers 14 ist zum einen mit einem Eingang 24 der Kompensationsschaltung 10 und zum anderen mit der Elektronik 8 verbunden.

Die Kompensationsschaltung 10 umfaßt einen mit dem Eingang 24 verbundenen Hauptzweig 26, der aus einer Reihenschaltung eines Analog-Digital-Wandlers 28, eines Speichers 30, eines Digital-Analog-Wandlers 32, eines inversen Empfangs-Übertragungsfaktor-Glieds 34, eines inversen Sende-Übertragungsfaktor-Glieds 36 und eines Reflexionsfaktor-Nachbildungsglieds 38 besteht. Eine andere Reihenfolge in der Reihenschaltung des Hauptzweigs 26 außer der Zuordnung von Analog-Digital-Wandler 28 und Digital-Analog-Wandler 32 zum Speicher 30, ist aus der theoretischen Sicht der Signalverarbeitung ohne Belang.

An den Hauptzweig 26 schließen sich ein erster Nebenzweig 40 der mit dem Ausgang 12, und ein zweiter Nebenzweig 42, der mit dem Ausgang 20 verbunden ist, an. Der erste Nebenzweig 40 besteht aus einer Reihenschaltung eines Übertragungsglieds 44 mit einer zum zeitgesteuerten Verstärker 6 inversen Charakteristik, eines Inverters 46 und einer Stromquelle 48. Auch hier kann theoretisch die Anordnung von Übertragungsglied 44 und Inverter 46 vertauscht werden. Der zweite Nebenzweig 42 besteht lediglich aus einer Wandlerimpedanz-Nachbildung, wobei die Wanlerimpedanz mit Zw(f) bezeichnet ist.

Im folgenden wird das Verfahren, nach dem Reflexionen am Wandler kompensiert werden, anhand von FIG 1 beschrieben. Der Ablauf ist im Detail der einfacheren Darstellbarkeit wegen in der Frequenzebene dargestellt. Die Multiplikationen im Frequenzbereich können im Zeitbereich als Faltungsoperation ausgeführt werden.

Der Wandler 2 ist im Sendefall durch einen Sende-Übertragungsfaktor Us(f) charakterisiert, der das Verhältnis von komplexem Schalldruck zu komplexem Sendestrom angibt. Im Empfangsfall ist der Wandler durch den Empfangs-Übertragungsfaktor Ue(f) charakterisiert, der das Verhältnis von komplexer Empfangsspannung zu komplexem Schalldruck gebildet ist. Der Reflexionsfaktor R zwischen Wandler und dem davor angeordneten Ausbreitungsmedium oder Gewebe ist ohne Anpaßschicht frequenzunabhängig und mit Anpaßschicht eine Funktion der Frequenz R(f).

Nach einem ersten Sendepuls erreicht den Ultraschallwandler 2 ein Nutzechosignal, das hier durch den Druckverlauf pe1(t) veranschaulicht ist. Der Wandler reflektiert einen Teil des Echosignals. Der reflektierte Anteil lautet wie folgt

$$F1(f) = R(f) \, pe1(f).$$

Daraus ergeben sich Mehrfachreflexionen, die durch das Signal r1(t) in FIG 1 angegeben sind. Die in die Frequenzebene transformierten Druckverläufe pe1(f) und r1(f) werden vom Wandler 2 mit dem Übertragungsfaktor Ue(f) in das konventionelle, elektrische Hochfrequenzechosignal E1 einer Bildzeile gewandelt und nach Digitalisierung im Speicher 30 gespeichert. Der Zusammenhang zwischen dem gespeicherten Signal E1 und den Ultraschall-Drucksignalen pe1(f) und r1(f) lautet:

$$E1(f) = v(f) \, Ue(f) \, (pe1(f) + r1(f)).$$

In einer ersten Variante wird unmittelbar an diesen ersten Sende-Empfangs-Zyklus in dieselbe Richtung wie vorher in gleicher Weise erneut gesendet und anschließend das Signal pe2(t) bzw. pe2(f) empfangen.

Während des zweiten Sende-Empfangs-Zyklus wird dann über eine Additionsstelle während des Empfangs gleichzeitig dem Wandler 2 das Kompensations-Sendesignal I(f), dessen Erzeugung weiter unten erläutert ist, zugeführt. In der Kompensationsschaltung nach FIG 1 ist die Überlagerung des Kompensations-Sendesignals I(f) während des Empfangs durch die Parallelschaltung der Stromquelle 48 zum Wandler 2 ausgeführt. Statt dessen kann die Überlagerung ebenfalls durch Hintereinanderschaltung von Spannungsquellen realisiert werden.

Das Kompensations-Sendesignal I(f) bewirkt ein Drucksignal an der Oberfläche des Wandlers 2, das in der Amplitude dem reflektierten Anteil F2(f) des zweiten Empfangssignals pe2(f) annähernd entspricht, da hier der Empfang beim ersten Sende-Empfangs-Zyklus als Modell für den Empfang beim zweiten Sende-Empfangs-Zyklus dient. Jedoch ist die Polarität des Kompensations-Sendesignals I(f) umgekehrt zum reflektierten Anteil F2(f) des Empfangssignals pe2(f).

Zur Erzeugung des Kompensations-Sendesignals I(f) wird das Empfangssignal E1(f) aus dem Speicher 30 ausgelesen, wieder in ein Analogsignal zurückgewandelt und dann durch den Hauptzweig 26 und ersten Nebenzweig 40 so gefiltert und verstärkt, daß die Kompensationsbedingungen erfüllt sind. Der Zusammenhang zwischen dem Kompensations-Sendesignal I(f) und dem gespeicherten Signal E1(f) lautet

$$I(f) = - R(f) \, (pe1(f) + r1(f))/Us(f).$$

Im zweiten Sende-Empfangs-Zyklus gilt nun für den reflektierten Anteil F2(f) des Empfangssignals pe2(f)

$$F2(f) = R(f) \, pe2(f) - R(f) \, (pe1(f) + r1(f)).$$

Der reflektierte Anteil F2(f) ist durch das Kompensations-Signal I(f) zu Null kompensiert, wenn keine Relativbewegung zwischen Objekt und Wandler 2 zwischen den beiden Sende-Empfangs-Zyklen stattgefunden hat und wenn das Mehrfachecho r1(f) des ersten Zyklus klein gegenüber dem Echosignal pe1(f) ist. Damit wird beim Empfang im zweiten Zyklus kein Mehrfachecho r2(f) ausgelöst.

Das kompensierte Empfangssignal E2(f) am Ausgang des zeitgesteuerten Verstärkers 6, das auch dem Summierglied 14 zugeführt wird, lautet nun

$$E2(f) = Ue(f) \, v(f) \, pe2(f) - Zw(f) \, R(f) \, v(f) \, (pe1(f) + r1(f))/Us(f)$$

Dem Summierglied 14 wird von der Kompensationsschaltung 10 ebenfalls ein Signal

$$K(f) = Zw(f) \, R(f) \, v(f) \, (pe1(f) + r1(f))/Us(f)$$

über den zweiten Eingang 18 zugeführt, so daß ein vom Kompensations-Sendesignal I(f) Empfangssignal

$$E(f) = Ue(f) \, v(f) \, pe2(f)$$

**4**

EP 0 541 856 B1

der Elektronik 8 zugeführt wird.

Bei der Überlagerung des Kompensations-Sendesignals I(f) ist auf die richtige Amplitude und Phasenlage in bezug auf das Echosignal pe2(f) zu achten, damit eine gute Kompensation gelingt. Die Phasendifferenz der beiden Signale sollte besser als ein Zehntel der Periodendauer sein. Es wurde festgestellt, daß bereits eine Absenkung des Mehrfachechos um 10 dB einen sichtbaren Gewinn für das Ultraschallbild darstellt. Auf mögliche Fehlerquellen wird weiter unten noch eingegangen.

Hier soll noch auf eine gedankliche Schwierigkeiten eingegangen werden, da das Modell des ersten Echosignals E1(f) noch die Störgröße der Mehrfachreflektion r1(f) enthält, die bei der Kompensation mit ausgesendet wird. Diese Störgröße darf aber als klein gegen die Nutzinformation des Echos pe1(f) angesetzt werden. Zwischen beiden liegen in der Praxis mindestens 6 dB durch den Wandlerreflexionsfaktor R(f) sowie durch Unstetigkeiten im Gewebe mindestens 20 dB. Zusammen wird die Mehrfachreflexion um einen Faktor von mindestens 10 bis 20 gedämpft. Solange keine Genauigkeit der Kompensation angestrebt wird, die 5 % unterschreitet, kann dieser Fehler vernachlässigt werden. Damit entfallen praktisch weitere Mehrfachreflexionen, mit der Ausnahme der Mehrfachreflexionen aufgrund von Mehrfachreflexionen. Der Fehler im kompensierten Empfangssignal E(f) des zweiten Empfangs enspricht im wesentlichen nur mehr der Differenz durch Mehrfachartefakte. Aus der Information beider Empfangszyklen ist also das ungestörte Signal rekonstruierbar.

Die nicht einfache Signalverarbeitung und die Genauigkeitsanforderungen lassen sich mit einem digitalen Frond-End gut realisieren. Hauptfehlerquellen bei der Kompensation können sein:
- die Mehrfachreflexion r1(f) ist nicht klein genug,
- der Reflexionsfaktor R(f) ist durch Gewebeunterschiede nicht genau genug bekannt,
- durch Bewegungen zwischen den beiden Sende-Empfangs-Zyklen entstehen Bewegungsartefakte,
- wegen einer zu großen Wandleroberfläche erfolgen Phasenauslöschungen des Empfangssignals,
- in der analogen Signalverarbeitung treten Rechenungenauigkeiten auf.

Zum oben erwähnten Problem der Phasenauslöschung wird noch bemerkt, daß die Kompensation besonders gut gelingt, wenn die Richtcharakteristik der Reflexion vom Wandler 2 bekannt ist, um in gleicher Richtung kompensatorisch abstrahlen zu können. Bei einem großflächigen Wandler z.B. kann aus dem Empfangssignal kein Schluß auf die Richtung gezogen werden, aus der empfangen wurde bzw. in die reflektiert wird. Ein schwaches Signal kann sowohl von einem schwachen Reflektor in der Hauptkeule als auch von einem starken in der Nebenkeule herrühren. Anders ausgedrückt, kann eine schräg einfallende Wellenfront nur unvollständig kompensiert werden (Phasenauslöschung auf Wandleroberfläche), weil zur Kompensation hauptsächlich nur in Haupt-Abstrahlrichtung gesendet werden kann. Die Bedingung ist exakt nur für einen punktförmigen Wandler ohne Richtcharakteristik erfüllt, der ungerichtet sendet und empfängt. Die vorgeschlagene Methode kann also besonders bei einem zweidimensionalen Array mit kleinen Elementarwandlern angewendet werden, deren Abmessungen kleiner als die halbe akustische Wellenlänge sind. Aber auch bei einem linearen Array oder auch Phased Array, bei dem in der Regel bei den Elementarwandlern eine Seitenlänge größer als eine halbe akustische Wellenlänge ist, lassen sich noch zufriedenstellende Ergebnisse erzielen.

Bei zu großen Mehrfachreflexionen r1(f) im ersten Sende-Empfangs-Zyklus kann der Prozeß auf Kosten von Bildaufbauzeit durch Iteration wiederholt werden.

In FIG 1 sind die Rechenschritte durch Analogfilter realisiert. Dabei kann die Wandlerimpedanz Zw(f) z.B. auch durch einen Symmetriewandler nachgebildet werden.

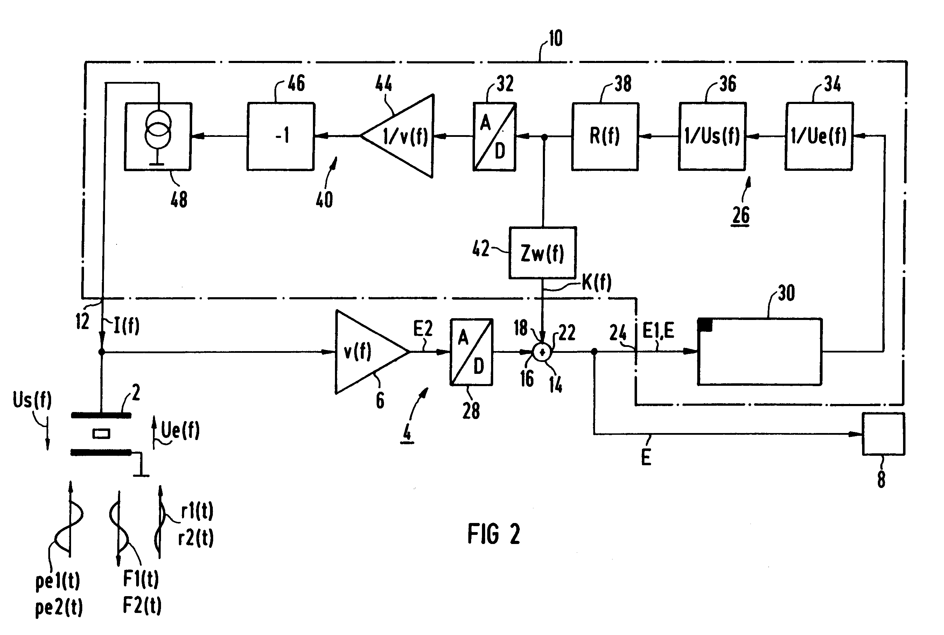

Die Kompensationsschaltung nach FIG 2 unterscheidet sich von der Schaltung nach FIG 1 im Blockschaltbild lediglich durch die Anordnung des Analog-Digital-Wandlers 28 und des Digital-Analog-Wandlers 32. Damit ist die gesamte Signalverarbeitung im Hauptzweig 26, zweiten Nebenzweig 42 sowie im Summierglied 14 in Digitaltechnik realisiert und der größte Teil der Rechnung kann durch Digitalfilter oder digitale Faltung erfolgen. Im Analogteil verbleiben aus Dynamikgründen der zeitgesteuerte Verstärker 6 sowie das Übertragungsglied 44. Da zeitabhängige Verstärker nach dem Stand der Technik auf 1 dB Gleichlaufgenauigkeit herstellbar sind, ist damit keine wesentliche Verschlechterung der Rechengenauigkeit begründet.

Der Speicher 30 ist hier als Zeilenspeicher ausgebildet, so daß für eine Sendestrahlrichtung zweimal gesendet werden muß. Damit ist die Abtastrate halbiert. Dieser Nachteil läßt sich vermeiden, wenn dem Wandler 2 die Anzahl von Zeilenspeichern zugeordnet ist, die der Anzahl der unterschiedlichen Abtastrichtungen entspricht. Im Speicher ist dann jeweils die aktuelle Abtastzeile aus dem vorhergehenden Bild gespeichert, die zur Kompensation und Erzeugung des Kompensations-Sendesignals ausgelesen wird, für eine Zeile also anstatt wie beschrieben das Signal E1(f) das Signal E(f). Dabei müssen Bewegungsartefakte aber über die Zeit eines Abtastdurchlaufs für ein gesamtes Ultraschallbild von ca. 30 ms und nicht nur zwischen zwei aufeinanderfolgenden Sendeschüssen von nur 300 µs berücksichtigt werden. Systeme mit geringerer Zahl von Sendevorgängen, wie z.B. synthetische Apertur oder Exploso-Scan, haben auch nur eine kleine Zahl von Speichern nötig.

Ist der Wandler 2 Teil eines Wandlerarrays, dann ordnet man jedem Elementarwandler des Arrays eine

5

Kompensationsschaltung 10 mit Speicher 30 zu.

**Patentansprüche**

1. Vorrichtung zur Unterdrückung von Reflexionen (F2) eines akustischen Empfangssignals (pe2) an einem Ultraschallwandler (2), **dadurch gekennzeichnet,** daß der Ultraschallwandler (2) mit einer Kompensationsschaltung (10) verbunden ist, die dem Ultraschallwandler (2) während des Empfangs ein Kompensations-Sendesignal (I) zuführt, das dem akustischen Empfangssignal (pe2) ähnlich ist und eine zum akustischen Empfangssignal (pe2) umgekehrte Polarität aufweist, so daß ein am Ultraschallwandler (2) reflektierter Anteil (F2) des akustischen Empfangssignals (pe2) kompensiert ist, und daß in einem ebenfalls mit dem Ultraschallwandler (2) verbundenen Empfangskanal (4) ein Summierglied (14) angeordnet ist, dessen erstem Eingang (16) ein kompensiertes Empfangssignal (E2), welches aus dem Kompensations-Sendesignal (I) und einem dem akustischen Empfangssignal (pe2) entsprechenden elektrischen Empfangssignal gebildet ist zuführbar ist und dessen zweiter Eingang (18) mit der Kompensationsschaltung (10) verbunden ist, wobei dem zweiten Eingang (18) ein Signal zuführbar ist, das den vom Kompensations-Sendesignal (I) herrührenden Anteil aus dem kompensierten Empfangssignal (E2) entfernt, so daß der Ausgang (22) des Summiergliedes (14) ein vom Kompensations-Sendesignal (I) bereinigtes Empfangssignal (E) abgibt.

2. Vorrichtung nach Anspruch 1, **dadurch gekennzeichnet,** daß die Kompensationsschaltung (10) zusätzlich hinter dem Ausgang (22) des Summierers (14) mit dem Empfangskanal (4) verbunden ist.

3. Vorrichtung nach Anspruch 2, **dadurch gekennzeichnet,** daß die Kompensationsschaltung (10) einen Speicher (30) umfaßt, worin ein dem Empfangssignal entsprechendes Signal (E1) speicherbar ist, aus dem das Kompensations-Sendesignal (I) erzeugbar ist.

4. Vorrichtung nach Anspruch 2 oder 3, **dadurch gekennzeichnet,** daß die Kompensationsschaltung (10) ein Reflexionsfaktor-Nachbildungsglied (38) umfaßt, das den Reflexionsfaktor (R) zwischen dem Ultraschallwandler (2) und einem Ausbreitungsmedium nachbildet.

5. Vorrichtung nach einem der Ansprüche 2 bis 4, **dadurch gekennzeichnet,** daß die Kompensationsschaltung (10) ein inverses Empfangs-Übertragungsfaktor-Glied (34) und ein inverses Sende-Übertragungsfaktor-Glied (36) umfaßt.

6. Vorrichtung nach einem der Ansprüche 2 bis 5, **dadurch gekennzeichnet,** daß der Teil der Kompensationsschaltung (10), der den Empfangskanal mit dem Ultraschallwandler verbindet aus einem Hauptzweig (26) und einem ersten Nebenzweig (40) besteht, wobei der Hauptzweig (26) mit dem Empfangskanal verbunden ist und eine Reihenschaltung des Speichers (30), des inversen Empfangs-Übertragungsfaktor-Glieds (34), des inversen Sende-Übertragungsfaktor (36) und des Reflexionsfaktor-Nachbildungsglieds (38) umfaßt und der erste Nebenzweig (40) einen Inverter (46) und eine gesteuerte Quelle (48), die das Kompensations-Sendesignal (I) liefert, umfaßt und daß der Teil der Kompensationsschaltung (10), der den Empfangskanal (4) mit dem zweiten Eingang (18) des Summierglieds (14) verbindet, aus dem Hauptzweig (26) und einem zweiten Nebenzweig besteht, der eine Wandlerimpedanz-Nachbildung (42) umfaßt.

7. Vorrichtung nach einem der Ansprüche 2 bis 6, **dadurch gekennzeichnet,** daß das Kompensations-Sendesignal (I) ein eingeprägtes Stromsignal ist und daß das Empfangssignal ein Spannungssignal ist.

8. Vorrichtung nach Anspruch 6, **dadurch gekennzeichnet,** daß vor dem ersten Eingang (16) des Summierglieds (14) im Empfangskanal (4) ein zeitgesteuerter Verstärker (6) und im ersten Nebenzweig (40) ein Übertragungsglied (44) mit einer zum zeitgesteuerten Verstärker (6) inversen Charakteristik angeordnet sind.

9. Vorrichtung nach einem der Ansprüche 2 bis 8, **dadurch gekennzeichnet,** daß der Speicher (30) ein Digitalspeicher ist.

10. Vorrichtung nach einem der Ansprüche 2 bis 9, **dadurch gekennzeichnet,** daß der Speicher (30) ein Zeilenspeicher ist und das Empfangssignal (E1) einer Abtastzeile speichert.

11. Vorrichtung nach einem der Ansprüche 2 bis 9, **dadurch gekennzeichnet,** daß der Speicher (30) eine Speichermatrix ist und die Empfangssignale aller Abtastzeilen eines Abtast-Durchlaufs für ein Ultraschallbild speichert.

12. Vorrichtung nach einem der Ansprüche 9 bis 11, **dadurch gekennzeichnet,** daß vor dem Speicher (30) ein Analog-Digital-Wandler (28) und nach dem Speicher ein Digital-Analog-Wandler (32) angeordnet ist.

13. Vorrichtung nach einem der Ansprüche 9 bis 11, **dadurch gekennzeichnet,** daß im Empfangskanal (4) vor dem ersten Eingang (16) des Summierglieds (14) ein Analog-Digital-Wandler (28) und am Eingang des ersten Nebenzweigs (40) ein Digital-Analog-Wandler (32) angeordnet ist.

14. Vorrichtung nach einem der Ansprüche 1 bis 13, **dadurch gekennzeichnet,** daß mindestens eine Seite des Ultraschallwandlers (2) kürzer ist als die halbe akustische Wellenlänge im Ausbreitungsmedium.

15. Verfahren zur Unterdrückung von Reflexionen (F2) eines akustischen Empfangssignals (pe2) an einem Ultraschallwandler (2), **dadurch gekennzeichnet,** daß dem Ultraschallwandler (2) während des Empfangs ein Kompensations-Sendesignal (I) zugeführt wird, das dem Empfangssignal (pe2) ähnlich ist und eine zum Empfangssignal (pe2) umgekehrte Polarität aufweist, so daß ein am Ultraschallwandler (2) reflektierter Anteil (F2) des akustischen Empfangssignals (pe2) kompensiert ist, und daß der vom Kompensations-Sendesignal (I) herrührende Anteil aus einem aus dem Kompensations-Sendesignal (I) und einem dem akustischen Empfangssignal (pe2) entsprechenden elektrischen Empfangssignal gebildeten kompensierten Empfangssignal (E2) wieder entfernt wird.

16. Verfahren nach Anspruch 15, **dadurch gekennzeichnet,** daß das Kompensations-Sendesignal (I) aus dem Empfangssignal (E1) eines ersten Sende-Empfangs-Zyklus gewonnen wird und daß in einem wiederholten zweiten Sende-Empfangs-Zyklus während des Empfangs dem Wandler das aus dem ersten Sende-Empfangs-Zyklus gewonnene Kompensations-Sendesignal (I) zugeführt wird.

17. Verfahren nach Anspruch 16, **dadurch gekennzeichnet,** daß der erste und zweite Sende-Empfangs-Zyklus unmittelbar aufeinanderfolgen.

18. Verfahren nach Anspruch 16, **dadurch gekennzeichnet,** daß in einem ersten Abtast-Durchlauf der erste Sende-Empfangs-Zyklus für alle mögliche Abtastzeilen durchgeführt wird, daß dann in einem zweiten Abtastdurchlauf der zweite Sende-Empfangs-Zyklus ebenfalls für alle möglichen Abtastzeilen durchgeführt wird und daß in darauf folgenden weiteren Abtast-Durchläufen das Kompensations-Sendesignal jeweils aus dem kompensierten Empfangssignal des entsprechenden Sende-Empfangs-Zyklus des vorigen Abtast-Durchlaufs gebildet wird.

## Claims

1. Device for the suppression of reflections (F2) of an acoustic reception signal (pe2) at an ultrasonic transducer (2), characterized in that the ultrasonic transducer (2) is connected to a compensation circuit (10) which supplies a compensation transmission signal (I) to the ultrasonic transducer (2) during the reception, the compensation transmission signal (I) being similar to the acoustic reception signal (pe2) and having a polarity which is the reverse of the acoustic reception signal (pe2), so that a portion (F2) of the acoustic reception signal (pe2) reflected at the ultrasonic transducer (2) is compensated, and in that in a reception channel (4) likewise connected to the ultrasonic transducer (2) a summing element (14) is arranged, to the first input (16) of which a compensated reception signal (E2) can be supplied, the signal being formed from the compensation transmission signal (I) and an electrical reception signal corresponding to the acoustic reception signal (pe2), and the second input (18) of which is connected to the compensation circuit (10), whereby a signal can be supplied to the second input (18), which signal removes the portion coming from the compensation transmission signal (I) from the compensated reception signal (E2) so that the output (22) of the summing element (14) emits a reception signal (E) cleared of the compensation transmission signal (I).

2. Device according to claim 1, characterized in that the compensation circuit (10) is additionally connected behind the output (22) of the summing unit (14) to the reception channel (4).

7

3. Device according to claim 2, characterized in that the compensation circuit (10) comprises a memory (30) in which a signal (E1) corresponding to the reception signal can be stored, from which the compensation transmission signal (I) can be generated.

4. Device according to claim 2 or 3, characterized in that the compensation circuit (10) comprises a reflection factor simulator (38) which simulates the reflection factor (R) between the ultrasonic transducer (2) and a propagation medium.

5. Device according to one of claims 2 to 4, characterized in that the compensation circuit (10) comprises an inverse reception transfer ratio element (34) and an inverse transmission transfer ratio element (36).

6. Device according to one of claims 2 to 5, characterized in that the part of the compensation circuit (10) which connects the reception channel with the ultrasonic transducer consists of a main branch (26) and a first subsidiary branch (40), whereby the main branch (26) is connected to the reception channel and comprises a series circuit of the memory (30), the inverse reception transfer ratio element (34), the inverse transmission transfer ratio (36) and the reflection factor simulator (38), and the first subsidiary branch (40) comprises an inverter (46) and a controlled source (48) which supplies the compensation transmission signal (I), and in that the part of the compensation circuit (10) which connects the reception channel (4) with the second input (18) of the summing element (14) consists of the main branch (26) and a second subsidiary branch which comprises a transducer impedance simulator (42).

7. Device according to one of claims 2 to 6, characterized in that the compensation transmission signal (I) is an injected current signal and in that the reception signal is a voltage signal.

8. Device according to claim 6, characterized in that a time-controlled amplifier (6) is arranged in front of the first input (16) of the summing element (14) in the reception channel (4) and a transfer element (44) with a characteristic inverse to the time-controlled amplifier (6) is arranged in the first subsidiary branch (40).

9. Device according to one of claims 2 to 8, characterized in that the memory (30) is a digital memory.

10. Device according to one of claims 2 to 9, characterized in that the memory (30) is a line memory and stores the reception signal (E1) of a sampling line.

11. Device according to one of claims 2 to 9, characterized in that the memory (30) is a memory matrix and stores the reception signals of all sampling lines of a sampling passage for an ultrasonic image.

12. Device according to one of claims 9 to 11, characterized in that an analog-to-digital converter (28) is arranged in front of the memory (30) and a digital-to-analog converter (32) is arranged after the memory.

13. Device according to one of claims 9 to 11, characterized in that an analog-to-digital converter (28) is arranged in the reception channel (4) in front of the first input (16) of the summing element (14) and a digital-to-analog converter (32) is arranged at the input of the first subsidiary branch (40).

14. Device according to one of claims 1 to 13, characterized in that at least one side of the ultrasonic transducer (2) is shorter than half the acoustic wavelength in the propagation medium.

15. Method for the suppression of reflections (F2) of an acoustic reception signal (pe2) at an ultrasonic transducer (2), characterized in that during the reception a compensation transmission signal (I) is supplied to the ultrasonic transducer (2), the compensation transmission signal (I) being similar to the reception signal (pe2) and having a polarity opposite to the reception signal (pe2), so that a portion (F2) of the acoustic reception signal (pe2) reflected at the ultrasonic transducer (2) is compensated, and in that the portion coming from the compensation transmission signal (I) is removed again from a compensated reception signal (E2) formed from the compensation transmission signal (I) and an electrical reception signal corresponding to the acoustic reception signal (pe2).

16. Method according to claim 15, characterized in that the compensation transmission signal (I) is obtained from the reception signal (EI) of a first transmission/reception cycle and in that in a repeated second transmission/reception cycle during the reception the compensation transmission signal (I) obtained from the first transmission/reception cycle is supplied to the transducer.

8

17. Method according to claim 16, characterized in that the first and the second transmission/reception cycle follow directly after one another.

18. Method according to claim 16, characterized in that in a first sampling passage the first transmission/reception cycle is carried out for all possible sampling lines, in that then in a second sampling passage the second transmission/reception cycle is likewise carried out for all possible sampling lines and in that in subsequent further sampling passages the compensation transmission signal is in each case formed from the compensated reception signal of the corresponding transmission/reception cycle of the previous sampling passage.

## Revendications

1. Dispositif de suppression de réflexions (F2) d'un signal de réception acoustique (pe2) par un transducteur à ultrasons (2), caractérisé par le fait que le transducteur à ultrasons (2) est relié à un circuit de compensation (10), qui envoie au transducteur à ultrasons (2), pendant la réception, un signal d'émission de compensation (I), qui est semblable au signal de réception acoustique (pe2) et a une polarité inversée par rapport au signal de réception acoustique (pe2), de sorte à compenser une composante (F2), qui est réfléchie par le transducteur à ultrasons (2), du signal de réception acoustique (pe2) et dans un canal de réception (4) également relié au transducteur à ultrasons (2) est disposé un circuit additionneur (14), à la première entrée (16) duquel peut être envoyé un signal de réception compensé (E2), qui est formé du signal d'émission de compensation (I) et d'un signal de réception électrique, correspondant au signal de réception acoustique (pe2), et dont la seconde entrée (18) est reliée au circuit de compensation (10), tandis qu'à la seconde entrée (18) peut être envoyé un signal, qui élimine la composante, provenant du signal d'émission de compensation (I), du signal de réception compensé (E2), de sorte que la sortie (22) du circuit additionneur (14) fournisse un signal de réception (E), dans lequel est éliminé le signal d'émission de compensation (I).

2. Dispositif suivant la revendication 1, caractérisé par le fait que le circuit compensateur (10) est relié en outre, en aval de la sortie (22) de l'additionneur (14), au canal de réception (4).

3. Dispositif suivant la revendication 2, caractérisé par le fait que le circuit de compensation (10) comprend une mémoire (30), dans laquelle peut être mémorisé un signal (E1), qui correspond au signal de réception et à partir duquel peut être produit le signal d'émission de compensation (I).

4. Dispositif suivant la revendication 2 ou 3, caractérisé par le fait que le circuit de compensation (10) comprend un circuit (38) de simulation du facteur de réflexion, qui simule le facteur de réflexion (R) entre le transducteur à ultrasons (2) et un milieu de propagation.

5. Dispositif suivant l'une des revendications 2 à 4, caractérisé par le fait que le circuit de compensation (10) comprend un circuit (34) multipliant par l'inverse du facteur de transmission à la réception et un circuit (36) multipliant par l'inverse du facteur de transmission à l'émission.

6. Dispositif suivant l'une des revendications 2 à 5, caractérisé par le fait que la partie du circuit de compensation (10), qui relie le canal de réception au transducteur à ultrasons, est constituée d'une branche principale (26) et d'une première branche secondaire (40), la branche principale (26) étant reliée au canal de réception et comportant un branchement en série de la mémoire (30), du circuit (34) multipliant par l'inverse du facteur de transmission à la réception, du circuit (36) multipliant par l'inverse du facteur de transmission à l'émission et du circuit (38) de simulation du facteur de réflexion, tandis que la première branche secondaire (40) comporte un inverseur (46) et une source commandée (48), qui fournit le signal d'émission de compensation (I) et que la partie du circuit de compensation (10), qui relie le canal de réception (4) à la seconde entrée (18) du circuit additionneur (14), est constituée de la branche principale (26) et d'une deuxième branche secondaire, qui comporte un circuit (42) de simulation de l'impédance du transducteur.

7. Dispositif suivant l'une des revendications 2 à 6, caractérisé par le fait que le signal d'émission de compensation (I) est un signal de courant d'une source de courant et que le signal de réception est un signal de tension.

8. Dispositif suivant la revendication 6, caractérisé par le fait qu'un amplificateur (6) commandé dans le temps est disposé dans le canal de réception (4) en amont de la première entrée (7) du circuit additionneur (14) et qu'un circuit de transmission (44) ayant une caractéristique inverse de celle de l'amplificateur (6) commandé dans le temps, est disposé dans la première branche secondaire (40).

9. Dispositif suivant l'une des revendications 2 à 8, caractérisé par le fait que la mémoire (30) est une mémoire numérique.

10. Dispositif suivant l'une des revendications 2 à 9, caractérisé par le fait que la mémoire (30) est une mémoire de lignes et mémorise le signal de réception (E1) d'une ligne de balayage.

11. Dispositif suivant l'une des revendications 2 à 9, caractérisé par le fait que la mémoire (30) est une matrice de mémoire et mémorise les signaux de réception de toutes les lignes de balayage d'un trajet de balayage pour une image formée par ultrasons.

12. Dispositif suivant l'une des revendications 9 à 11, caractérisé par le fait qu'un convertisseur analogique/ numérique (28) est disposé en amont de la mémoire (30) et qu'un convertisseur numérique/analogique (32) est disposé en aval de la mémoire.

13. Dispositif suivant l'une des revendications 9 à 11, caractérisé par le fait qu'un convertisseur analogique/ numérique (28) est disposé dans le canal de réception (4) en amont de la première entrée (16) du circuit additionneur (14) et qu'un convertisseur numérique/analogique (32) est disposé à l'entrée de la première branche secondaire (40).

14. Dispositif suivant l'une des revendications 1 à 13, caractérisé par le fait qu'au moins un côté du transducteur à ultrasons (2) est plus court que la demi-longueur d'onde acoustique dans le milieu de propagation.

15. Procédé de suppression de réflexions (F2) d'un signal de réception acoustique (pe2) par un transducteur à ultrasons (2), caractérisé par le fait que l'on envoie au transducteur à ultrasons (2), pendant la réception, un signal d'émission de compensation (I), qui est semblable au signal de réception (pe2) et a une polarité inverse de celle du signal de réception (pe2), de sorte à compenser une composante (F2), réfléchie par le transducteur à ultrasons (2), du signal de réception acoustique (pe2) et on élimine de nouveau la composante, qui provient du signal d'émission de compensation (I), d'un signal de réception compensé (E2) formé du signal d'émission de compensation (I) et d'un signal de réception électrique, qui correspond au signal de réception acoustique (pe2).

16. Procédé suivant la revendication 15, caractérisé par le fait que l'on obtient le signal d'émission de compensation (I) à partir du signal de réception (EI) d'un premier cycle d'émission-réception et que l'on envoie lors d'un second cycle répété d'émission-réception, pendant la réception, le signal d'émission de compensation (I) obtenu à partir du premier cycle d'émission-réception, au transducteur.

17. Procédé suivant la revendication 16, caractérisé par le fait que les premier et second cycles d'émission-réception se succèdent directement.

18. Procédé suivant la revendication 16, caractérisé par le fait que lors d'un premier trajet de balayage, on effectue le premier cycle d'émission-réception pour toutes les lignes possibles de balayage, qu'ensuite, lors d'un second trajet de balayage, on effectue également le second cycle d'émission-réception pour toutes les lignes de balayage possibles et que lors d'autres trajets suivants de balayage, on forme le signal d'émission de compensation à partir du signal de réception compensé du cycle d'émission-réception correspondant du trajet de balayage précédent.

FIG 1

EP 0 541 856 B1

FIG 2

EP 0 541 856 B1